(19) Europäisches Patentamt
European Patent Office
Office européen des brevets

(11) Publication number: **0 125 852**
**B1**

(12) **EUROPEAN PATENT SPECIFICATION**

(45) Date of publication of patent specification: **20.07.88**

(51) Int. Cl.$^4$: **C 08 L 95/00** // C08K5/00

(21) Application number: **84303039.6**

(22) Date of filing: **04.05.84**

(54) **Metal amine complexes for improving the bond strength properties of asphalt.**

(30) Priority: **12.08.83 US 522952**
**06.05.83 US 492139**

(43) Date of publication of application:
**21.11.84 Bulletin 84/47**

(45) Publication of the grant of the patent:
**20.07.88 Bulletin 88/29**

(84) Designated Contracting States:
**AT BE CH DE FR GB IT LI NL SE**

(56) References cited:
**EP-A-0 077 632**
**FR-A-2 181 882**
**US-A-2 430 546**
**US-A-2 482 331**

(73) Proprietor: **MORTON THIOKOL, INC.**
**110 North Wacker Drive**
**Chicago Illinois 60606-1560 (US)**

(72) Inventor: **Gilmore, Dennis Wayne**
**5477 Ivanhoe Court**
**Fairfield Ohio (US)**
Inventor: **Girdler, Larry Murl**
**2470 Hudson Avenue**
**Norwood Ohio (US)**
Inventor: **Kugele, Thomas Gordon**
**6026 Colter Avenue**
**Cincinnati Ohio (US)**

(74) Representative: **Warren, Anthony Robert et al**
**BARON & WARREN 18 South End Kensington**
**London W8 5BU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 125 852 B1

**Description**

The present invention relates to the production of asphalt compositions, such as those used in paving and roofing applications, which have increased tensile strength and increased adhesion between the asphalt and a filler, e.g. mineral aggregate or glass fiber or a glass fiber mesh.

Asphalt may be generally described as a dark-brown to black cementitious material, solid or semi-solid in consistency, in which the primary constituents are a mixture of paraffinic and aromatic hydrocarbons and heterocyclic compounds containing sulfur, nitrogen and oxygen. As discussed in *The Asphalt Handbook* (The Asphalt Institute Manual, Series No. 4, 1965 ed.), various grades of asphalt may be produced by selecting different processing conditions. In this regard two basic types of solid asphalt, asphalt cement and air-blown asphalt, and two basic types of liquid asphalt, cutback asphalt and emulsified asphalt, are utilized commercially. Asphalt cement is defined as asphalt which has been refined to meet paving and industrial specifications; cutback asphalt is asphalt cement which has been liquified by blending with petroleum solvents; and asphalt emulsions are prepared such that the asphalt is emulsified in the inner phase (an oil-in-water type emulsion). The emulsion can also be of the water-in-oil type in which water constitutes the inner phase (see *Hellsten et al,* "Asphalt Compositions Having Improved Adhesion to Aggregate", U.S. Patent No. 3,928,061).

The particle size of mineral aggregate used in an asphalt composition may vary over a wide range, such as from $2 \times 10^{-5}$ to $6 \times 10^{-2}$ meters in diameter, or the aggregate may be of a fairly uniform size. Mineral aggregates employed in asphalt compositions also range in character from hydrophilic to hydrophobic. It has long been known that mineral aggregates have a greater attraction for water than for oil or asphalt. In general, it can be said that siliceous and acidic minerals such as sands and gravels tend to be very hydrophilic whereas calcareous and alkaline materials such as limestone tend to be slightly hydrophilic. It is difficult, therefore, to obtain and maintain a satisfactory asphalt coating on the mineral aggregate particles when water is present. One example of an asphalt composition is the combination of asphalt cement with a size-graded mineral aggregate. This combination is referred to as asphalt concrete and is used in road paving applications. A poor asphalt coating on the mineral aggregate leads to breakup of the asphalt concrete and commonly results in potholes and flaking pavements.

One common method of pavement construction is to remove water from the aggregate by forced evaporation prior to coating with asphalt cement. In practice, this requires a certain amount of aggregate drying time which consumes energy and may result in a lengthened construction period. If weather conditions are unfavourable, such as during periods of rainfall or high humidity, road construction may be severely hindered if not halted. Even if the water is removed and the asphalt successfully deposited onto the aggregate, the asphalt coating may ultimately be degraded by the action of groundwater or rainfall.

A successful method of increasing pavement life has been to add one or more antistripping additives to the asphalt composition. Such additives increase the hydrophobicity of the aggregate, thereby strengthening and preserving the asphalt-aggregate bond. While antistripping additives have been found to be successful in certain paving and roofing applications, conventional asphalt compositions employing such additives are still limited in that the strength of the asphalt-aggregate bond is often not sufficient to resist damage from prolonged conditions of stress and wear.

US—A—2482331 discloses and claims a bituminous composition wherein there is added to the bitumen 0.1 to 10 weight% of a complex compound of a polyvalent metal chloride and an organic dyestuff containing a basic group, selected from methylene blue hydrochloride, rhodamine hydrochloride and malachite green hydrochloride.

US—A—2430546 discloses and claims a coating composition comprising asphalt or bitumen, 0.1 to 1.5 weight% of an oil-soluble lower amine and 0.5 to 5.0 weight% of an oil-soluble polyvalent metal soap of a high-molecular weight acid.

It is an object of the present invention to provide for an asphalt additive comprised of certain metal amine complexes which will significantly increase the overall tensile strength and durability to harmful environmental conditions of an asphalt composition by virtue of an improved asphalt-aggregate bond.

It has now been found that the foregoing objects may be accomplished by the use of metal amine complexes which result in a surprisingly high level of adhesion between the mineral aggregate or glass fibres or glass fibre mesh and asphalt, and thus an improved overall composition tensile strength and greater durability to harmful environmental conditions.

There is used at least 0.2, typically 0.2 to 2.0 (preferably 0.3 to 1.0) parts of metal amine complex per 100 parts by weight of asphalt.

Accordingly the present invention consists in a metal amine complex comprising the reaction product of an amine and a salt, characterised in that the amine is at least one species selected from:

A.

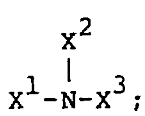

General Formula I

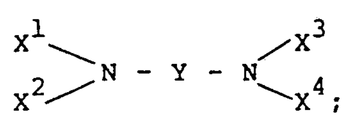

General Formula II

B. a reaction product of A and a formaldehyde source;

C. a reaction product of B and an oxirane selected from alkyl, cycloalkyl, aryl, or cyclohexylene oxiranes;

D. a reaction product of A and an oxirane selected from cycloalkyl, aryl, alkyl, or cyclohexylene oxiranes; and

E. a reaction product of D and a formaldehyde source;

and wherein said salt comprises:

F. at least one metal-containing cation with said metal selected from Groups IIA, IVB, VIB (except molybdenum), VIIB, VIII, IB, IIB, IIIA, or IVA of the Periodic Table; mono- or dialkyltin; and mono-, di-, or trialkylsilicon; and

G. at least one anion selected from chloride, bromide, hydroxy, sulphate, derivations of phosphoric and phosphorous acids and carboxylates having one of the formulae:

$$-O-\overset{\overset{O}{\|}}{C}-R^2 \; ; \quad -O-\overset{\overset{O}{\|}}{C}-R^3-\overset{\overset{O}{\|}}{C}-O-R^4 \quad \text{or} \quad -O-\overset{\overset{O}{\|}}{C}-R^3-\overset{\overset{O}{\|}}{C}-O-$$

but having no more than 6 carbon atoms.

In the above General Formulae:

i. $X^1$, $X^2$, $X^3$, and $X^4$ are independently selected from:

$$-R^1-O-R^5; \quad -R^1-O-\overset{\overset{O}{\|}}{C}-R^4; \quad -\overset{\overset{O}{\|}}{C}-R^4; \quad -R^1-O-\overset{\overset{O}{\|}}{C}-R^3-\overset{\overset{O}{\|}}{C}-O-R^2; \quad -R^1-NR^5_2;$$

$$-\overset{\overset{O}{\|}}{C}-R^3-\overset{\overset{O}{\|}}{C}-O-R^2; \quad -R^5; \quad -R^1-O-\overset{\overset{O}{\|}}{C}-R^3-\overset{\overset{O}{\|}}{C}-O-R^1-; \quad -R^1(O-R^1)_aO-R^2;$$

$$(R^1-\underset{R^5}{\underset{|}{N}})_aR^1-NR^5_2; \quad (R^1-\underset{R^5}{\underset{|}{N}})_aR^1-O-R^2; \quad (R^1-\underset{R^5}{\underset{|}{N}})_a\overset{\overset{O}{\|}}{C}-R^5;$$

and hydrogen; or $X_1$ and $X_2$ and/or $X_3$ and $X_4$ together with the nitrogen atom to which they are bonded form a 5 or 6-membered ring containing at least one nitrogen atom, the ring optionally containing carbon atoms and, optionally, oxygen atoms and/or further nitrogen atoms, which ring can be substituted by $R^5$, provided that at least one X or one $R^5$ must be hydrogen;

Illustrative ring systems include morpholine, piparizine, piperidine and imidazoline.

In all of the amine systems mentioned above at least one nitrogen must not be tertiary (i.e. at least one X or one $R^5$ must be hydrogen).

As regards the other variable in the above formulae,

Y is selected from:

$$-R(\underset{X^1_b}{\underset{|}{N}}-R^1_c)_a; \quad -R^1-; \quad -R^1(O-R^1)_a \quad \text{or} \quad -R^1-O-\overset{\overset{O}{\|}}{C}-R^3-\overset{\overset{O}{\|}}{C}-O-R^1$$

or forms a six-membered ring with the two nitrogens of general formula II.

R is alkylene of from one to six carbon atoms, e.g., methylene, ethylene, hexamethylene or cyclohexamethylene, or a six-membered ring formed with two nitrogen atoms.

$R^1$ is $C_1$—$C_{20}$ alkylene, e.g. methylene, ethylene, hexamethylene or even up to eicosanylene, cycloalkylene e.g. cyclohexamethylene or arylene, optionally substituted by hydroxy, ester or hydrocarbyl.

$R^2$ is $C_1$—$C_{20}$ alkyl, e.g. methyl, ethyl, butyl, eicosanyl; cycloalkyl e.g. cyclohexyl; aryl, alkaryl, e.g. tolyl; or aralkyl, e.g. benzyl; or any of the above substituted by hydroxy or ester. $R^2$ can also be hydrogen.

$R^3$ is $C_1$—$C_{20}$ alkylene; cycloalkylene of up to 6 carbon atoms, phenylene, naphthylene, or any of these substituted by methyl, hydroxy or ester; or —CH=CH—. Illustrative groupings for $R^1$ apply equally here.

$R^4$ is $C_1$—$C_{20}$ alkyl or alkylene, e.g. propenyl, hexenyl or octadecenyl; phenyl; naphthyl; alkaryl; benzyl; cycloalkyl; or any of the above substituted by hydroxy or ester; or

$$-R^1(O-R^1)_a\,OR^2; \quad (R^1-\underset{R^5}{\underset{|}{N}})_a\,R^1-NR^5_2; \quad (R^1-\underset{R^5}{\underset{|}{N}})_a\,R^1-O-R^2; \text{ or } (R^1-\underset{R^5}{\underset{|}{N}})_a\,\overset{\overset{O}{\|}}{C}-R^5.$$

Illustrative groupings for $R^2$ apply equally here.

$R^5$ is hydrogen; alkenyl, alkyl; cycloalkyl; aryl; alkaryl; aralkyl; or any of these substituted by hydroxy, ester, alkyl imidazoline or alkenyl imidazoline; alkyl imidazoline or alkenyl imidazoline;

$-R^1-OH$; 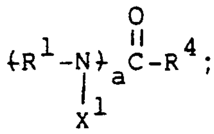; 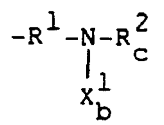; 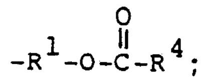;

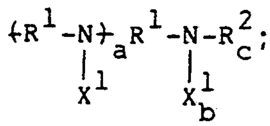; 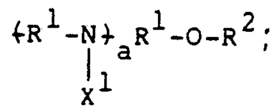; $-R^1-O(R^1-O)_aR^2$;

in the above formulae, a is 0 to 6, b and c are 0, 1 or 2. When a compound of General Formula I contains at least two nitrogen atoms this compound is not within General Formula II.

The following chart illustrates examples of amines within General Formula I which are useful in obtaining the end products according to the invention.

| Example No. | $X^1$ | $X^2$ | $X^3$ |
|---|---|---|---|
| 1. | $CH_3-(CH_2)_{10}-CH_2-$ | $-CH_2CH_2CH$ | $-H$ |
| 2. | 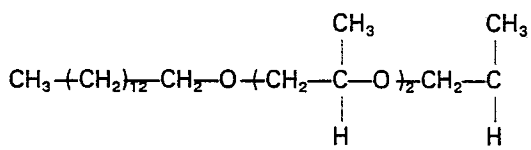 | $-H$ | $-H$ |
| 3. | $CH_3-$ | $CH_3-$ | $-H$ |
| 4. | | 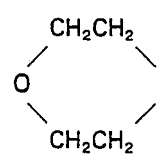 | $-H$ |
| 5. | 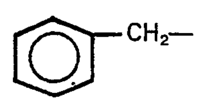 | $CH_3-$ | $-H$ |
| 6. | 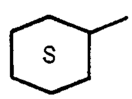 | $-H$ | $-H$ |
| 7. | 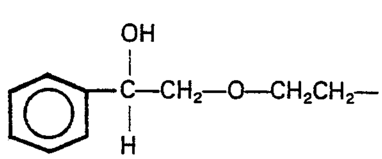 | $-H$ | $-H$ |
| 8. | 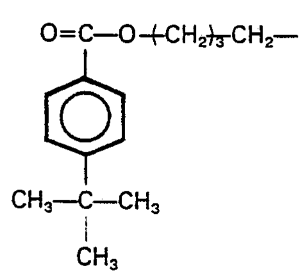 | $-H$ | $-H$ |

| Example No. | $X^1$ | $X^2$ | $X^3$ |
|---|---|---|---|
| 9. | 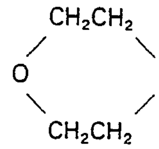 | | —H |
| 10. | 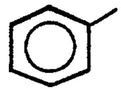 | 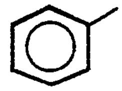 | —H |
| 11. | 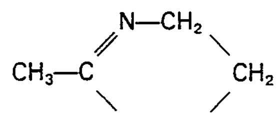 | | —H |
| 12. | 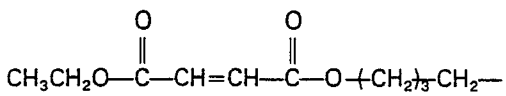 | —H | —H |
| 13. | 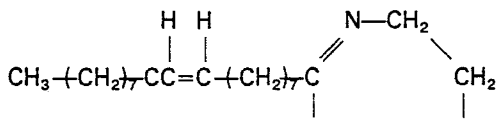 | | —H |
| 14. | 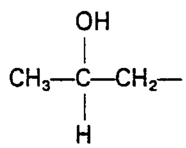 | same as $X^1$ | —H |
| 15. | 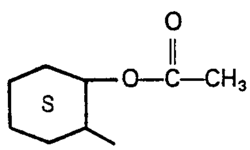 | —H | —H |
| 16. | 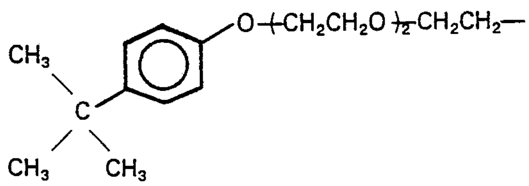 | same as $X^1$ | —H |
| 17. | $HO(CH_2)_3CH_2—$ | $HO(CH_2)_3CH_2—$ | H— |

The following chart illustrates examples of amines within General Formula II which are useful in obtaining the end products according to the invention.

| Example No. | X¹ | X² | X³ | X⁴ | Y |
| --- | --- | --- | --- | --- | --- |
| 1. | —H | —H | —H | —H | 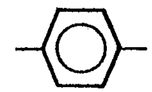 |
| 2. | 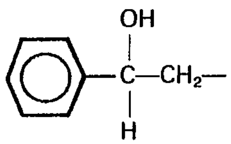 | —H | 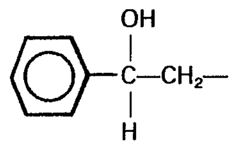 | —H | $-CH_2CH_2-O-CH_2CH_2-$ |
| 3. | $CH_3-$ | —H | $CH_3-$ | —H | 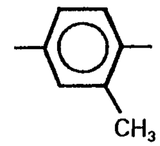 |
| 4. | —H | —H | —H | —H | 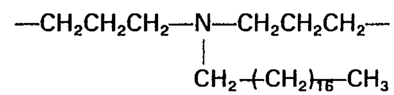 |
| 5. | $-CH_2CH_2OH$ | —H | $-CH_2CH_2OH$ | —H | 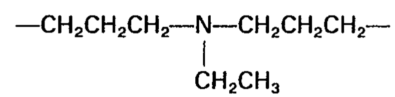 |
| 6. | $-CH_2CH_2OH$ | $-CH_2CH_2OH$ | $-CH_2CH_2OH$ | —H | 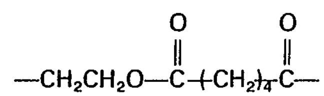 |
| 7. | —H | —H | —H | —H | 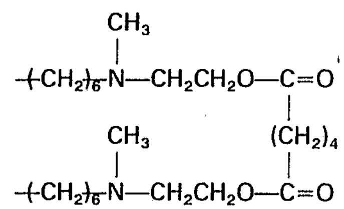 |

| Example No. | $X^1$ | $X^2$ | $X^3$ | $X^4$ | Y |
|---|---|---|---|---|---|
| 8. | 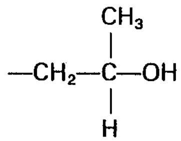 | —H | 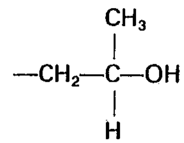 | —H | 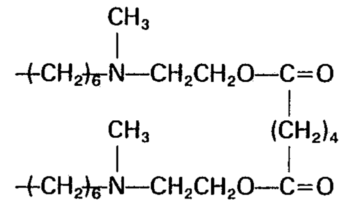 |
| 9. | $-CH_2CH_2CH_2NH_2$ | —H | $-CH_2CH_2CH_2NH_2$ | —H | $-(CH_2)_6-$ |
| 10. | $-CH_2CH_2OCH_2CH_3$ | —H | $-CH_2CH_2OCH_2CH_3$ | —H | 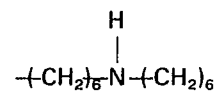 |
| 11. | 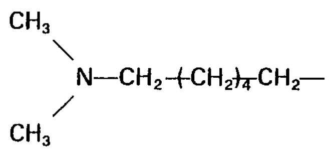 | —H | 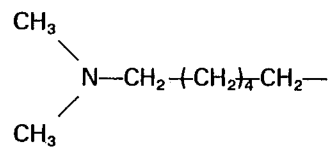 | —H | $-CH_2CH_2-$ |
| 12. | 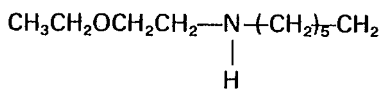 | —H | —H | —H | $-(CH_2)_4-$ |

| Example No. | $X^1$ | $X^2$ | $X^3$ | $X^4$ | Y |
|---|---|---|---|---|---|
| 13. | $-CH_2CH_2OH$ | — | —H | — | 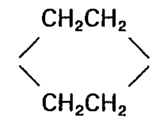 |
| 14. | 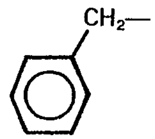 | — | —H | — | 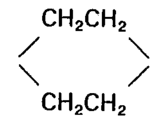 |
| 15. | 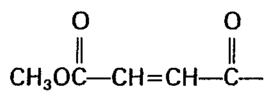 | — | —H | — | 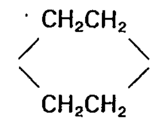 |
| 16. | 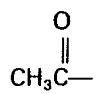 | —H | —H | —H | 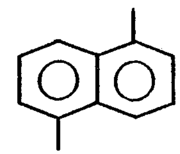 |
| 17. | 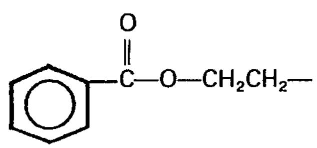 | —H | $-CH_2CH_3$ | $-CH_2CH_3$ | $-(CH_2)_3-$ |
| 18. | 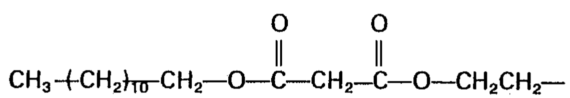 | —H | —H | —H | $-CH_2CH_2-O-CH_2CH_2-$ |
| 19. | 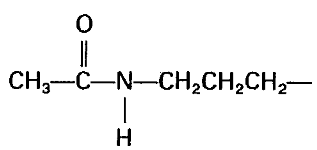 | —H | $-CH_2CH_2CH_2NH_2$ | —H | $-(CH_2)_6-$ |

| Example No. | $X^1$ | $X^2$ | $X^3$ | $X^4$ | Y |
|---|---|---|---|---|---|
| 20. | 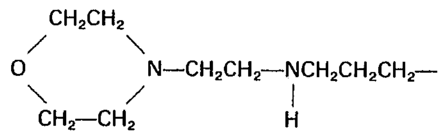 | $-H$ | 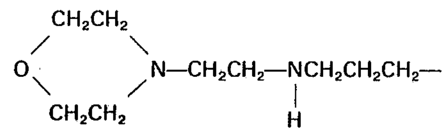 | $-H$ | $-(CH_2)_6-$ |
| 21. | 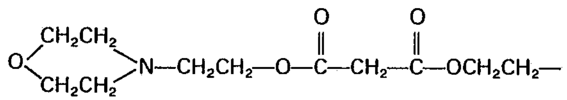 | $-H$ | $-H$ | $-H$ | $-(CH_2)_2-$ |
| 22. | $HOCH_2CH_2-$ | $-H$ | $HOCH_2CH_2-$ | $-H$ | 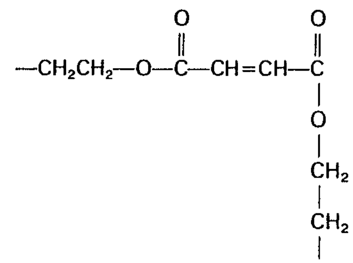 |
| 23. | 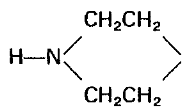 | $CH_3-$ | $CH_3-$ | $-(CH_2)_3-$ | |
| 24. | 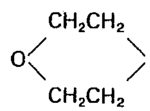 | $CH_3-$ | $CH_3-$ | $-(CH_2)_3-$ | |

The compounds described by General Formulas I or II, including any mixtures thereof, can be reacted with up to 50 weight percent formaldehyde or a conventional formaldehyde source, e.g. paraformaldehyde, trioxane or hexamethylenetetramine, to produce various intermediate formaldehyde condensation products. An example of one such reaction and the resultant intermediate products can be illustrated as follows:

Illustration 1

$H_2N\text{-}(CH_2)_6\text{-}NH_2 + CH_2O \longrightarrow H_2N\text{-}(CH_2)_6\text{-}NHCH_2OH$,

$[H_2N\text{-}(CH_2)_6\text{-}NH]_2CH_2$, $H_2N\text{-}(CH_2)_6\text{-}NH(CH_2O)_3H$,

$HOCH_2NH\text{-}(CH_2)_6\text{-}NHCH_2OH$, $HOCH_2NH\text{-}(CH_2)_6\text{-}N(CH_2OH)_2$,

$[H(OCH_2)_2]_2N\text{-}(CH_2)_6\text{-}NHCH_2OH$,

$HOCH_2NH\text{-}(CH_2)_6\text{-}NHCH_2NH\text{-}(CH_2)_6\text{-}NHCH_2OH$,

$HOCH_2NH\text{-}(CH_2)_6\text{-}NH[CH_2NH\text{-}(CH_2)_6\text{-}NH]_6CH_2NH\text{-}(CH_2)_6\text{-}NHCH_2OH$,

and the like.

The intermediate compounds (shown by example only in Illustration 1) may be further reacted with ethylene oxide, ethylene oxide containing an alkyl, cycloalkyl or aryl substituent or cyclohexylene oxide to yield a third group of amines useful in forming the end products according to the invention. An example of one such reaction can be illustrated as follows:

Illustration 2

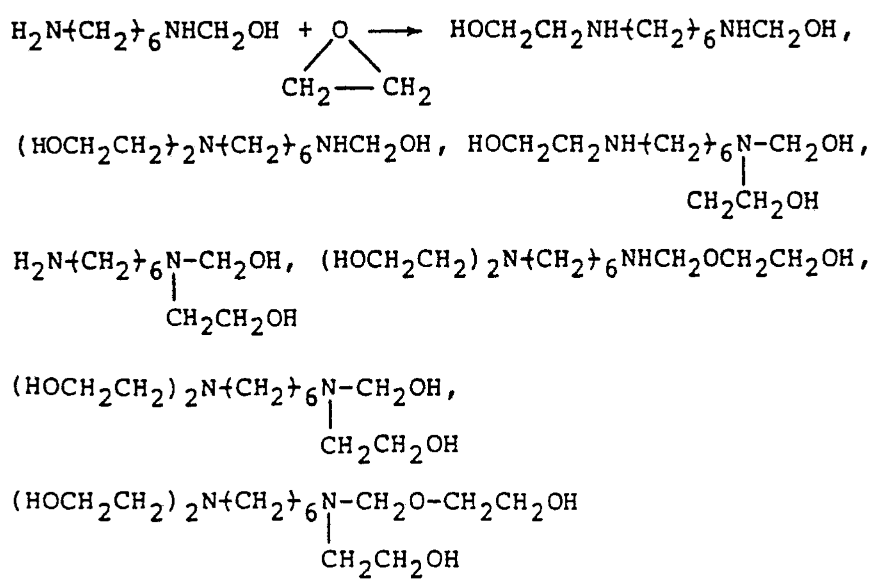

and like compounds.

The methods for preparing the foregoing amine compounds are well known in the chemical literature and include methathesis, condensation, esterification, amidization, epoxidation and transesterification. Thus, as shown by Examples A and B below, it should be clear to those skilled in the art that the end product(s) obtained depend on the stroichiometry, reaction temperature (0—200°C), order of reagent addition, type of catalyst used (if any) and time of addition and reaction length.

Example A

103 grams (1.0 mole) of diethylenetriamine was placed into a three-necked flask and heated to 100°C. 18 grams (0.6 mole) of paraformaldehyde was then added over a one-hour period while slowly increasing the temperature of the mixture to 150°C. The temperature was then held at 150°C for one hour producing a dark, viscous, tacky fluid weighing 109.5 grams and having a composition similar to that described in Illustration 1 above.

Example B

109.5 grams (1.0 mole) of the reaction product of Example A was placed into a three-necked flask and heated to 100°C. 44 grams (1.0 mole) of ethylene oxide was then slowly added and the mixture mixture maintained at 100° for 90 minutes. The vessel pressure was then reduced to 25 mm Hg (3.3 kPa) to remove any volatile material. The reaction mixture residue weighed 153 grams and was a dark, vicous, tacky liquid having a composition similar to that described in Illustration 2 above. As can be seen from Example B and Illustration 2 this procedure does not form polyalkyleneoxide groups.

The intermediate amines described by the foregoing Illustrations and Examples may then be reacted with various metal salts to produce the compounds according to the present invention. Such metals of the metal salts are taken from groups IIA, IVB, VIIB, VIII, IB, IIB, IIIA or IVA of the periodic chart of elements or chromium, or are salts of mono- or dialkyl tin or mono-, di- or trialkyl silicon. Examples of such metals are copper, tin, alkyltin, manganese, lead, aluminum, silicon, alkylsilicon, iron, titanium, magnesium, zinc, calcium, cobalt, nickel, chromium and zirconium and exist in their normal oxidation states as, for example, $Cu^{+1}$ and $Cu^{+2}$. In this regard, the preferred metals include copper, silicon, tin and manganese. The anions include Cl, Br, oxide, hydroxy, sulfate, carboxylates (but excluding carboxylates having 7 or more carbon atoms)

(e.g. 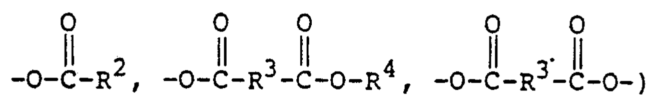 )

and tri or penta-valent phosphorus derivatives which contain at least one P—OH linkage. Illustrative metal salts include cuprous chloride, cupric chloride, cupric bromide, cupric sulfate, cupric oxide, cupric hydroxide, cupric acetate, cupric carbonate, cupric succinate, cupric formate, cupric maleate, cupric bis(methyl-maleate), cupric phosphate, cupric phosphite, cupric methanephosphonate, cupric benzene phosphonate, cupric benzene phosphonite, stannic chloride, stannous chloride, stannous bromide, stannous oxide, methyltin trichloride, dimethyltin dichloride, butyltin trichloride, dibutyltin dichloride, octyltin trichloride dioctyltin dichloride, monobutyltin oxide, dibutyltin oxide, monomethyltin oxide, dimethyltin oxide, dimethylsilicon dichloride, trimethylsilicon chloride. The same salts and types of salts can be used with any of the other metals. Likewise, there can be employed metal salts of any of the above mentioned metals with any of the anions mentioned in the following tables and examples. It should be noted that mixtures of metals and mixtures of anions can be used. It should be noted that in the case of silicon and tin tetrahalides are preferably avoided. Exemplary preparations of the metal amine complexes according to the invention are set forth in Examples C and D below.

Example C

153 gms. (1.0 mole) of the reaction product obtained in Example B was placed into a three-necked flask and heated to 80°C. Over a one-hour period, 135 gms. (1.0 mole) of cupric chloride dissolved in 1200 gms isopropanol was added to the mixture. The material was refluxed for one hour and then the solvent was removed under reduced pressure. The product produced was a thick, tacky liquid weighing 288 gms.

Example D

153 gms. (1.0 mole) of the product obtained in Example B was placed into a three-necked flask and heated to 80°C. Over a one-hour period, 245 gms. (1.0 mole) of manganese acetate tetrahydrate dissolved in 1200 gms. of isopropanol was added to the mixture, which was then distilled at atmospheric pressure untio 800 ml of end product material was accumulated. The pressure was then reduced to 25 mm Hg (3.3 kPa) and the mixture was heated to 100°C. The resultant product was a dark vicous, tacky liquid weighing 322 gms.

The theoretical structures of Examples C and D are believed to include the following compounds, as well as others, produced in accordance with the foregoing reaction sequences.

For example C:

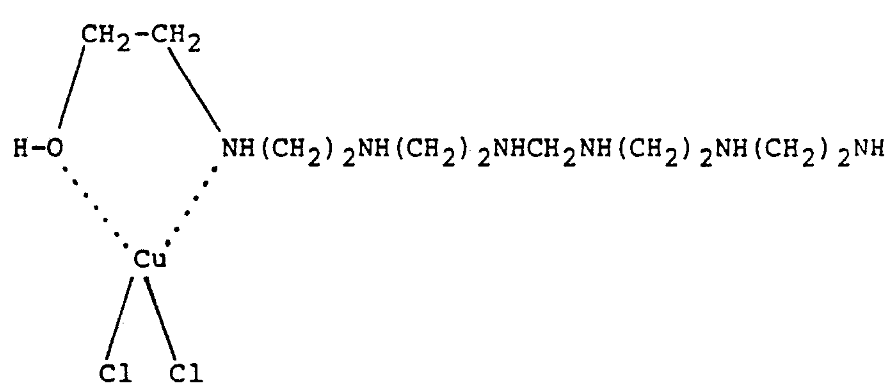

For example D:

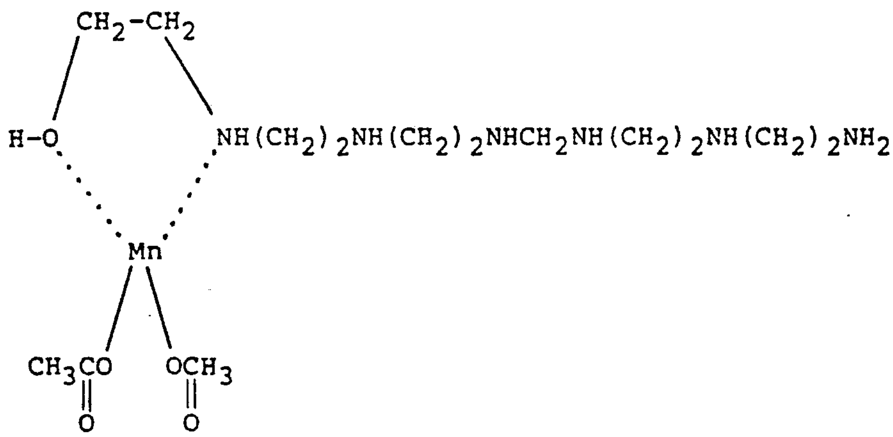

Consistent with the above description, various exemplary amine compounds were reacted with either a formaldehyde source or an epoxide as set forth in Table I below to form intermediate amine products useful in producing the metal amine complexes according to the invention.

TABLE I

| Compound No. | Amine Reactant | Other Reactant | Mole Ratio[1] |
|---|---|---|---|
| 1 | Crude Bis-hexamethylenetriamine (Source A) | — | — |
| 2 | Crude Bis-hexamethylenetriamine (Source B) | ethylene oxide | 1.0:2 |
| 3 | Pure Bis-hexamethylenetriamine | paraformaldehyde | 1.6:1 |
| 4 | Compound 3 | propylene oxide | 1.0:1 |
| 5 | Hexamethylenediamine | ethylene oxide | 1.0:1 |
| 6 | Compound 5 | paraformaldehyde | 1.6:1 |
| 7 | Triethylenetetraamine | — | — |
| 8 | N-hydroxyethyl piperazine | — | — |
| 9 | Diethylenetriamine | ethylene oxide | 1.0:1 |
| 10 | Compound 9 | paraformaldehyde | 1.0:1 |
| 11 | Diethylenetriamine | paraformaldehyde | 1.2:1 |
| 12 | Compound 11 | styrene oxide | 1.4:1 |
| 13 | n-octylamine | ethylene oxide | 1.0:1 |
| 14 | 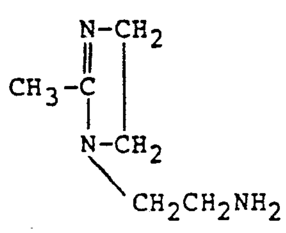 | propylene oxide | 1.0:1 |

NOTES:
[1]Refers to mole ratio of amine to co-reactant.

Thereafter, the intermediate compositions obtained from the reaction components set forth in Table I were combined with exemplary metal salts according to the mole ratios set forth in Table II below.

TABLE II

| Compound | Amine Reactant From Table 1 | Metal Salt Reactant | Mole Ratio[1] |
|---|---|---|---|
| 1 | 1 | cupric chloride | 4.1:1.0 |
| 2 | 1 | cupric acetate | 5.5:1.0 |
| 3 | 1 | cupric acetate | 2.5:1.0 |
| 6 | 2 | calcium sulfate | 4.2:1.0 |
| 7 | 1 | manganese (II) hydrogen phosphate | 2.9:1.0 |
| 10 | 2 | cupric chloride | 7.5:1.0 |
| 11 | 2 | cupric chloride | 3.6:1.0 |
| 12 | 2 | cupric chloride | 1.2:1.0 |
| 13 | 2 | dimethyltin (IV) dichloride | 5.8:1.0 |
| 14 | 2 | stannous chloride | 5.0:1.0 |
| 15 | 2 | stannic chloride | 6.9:1.0 |
| 16 | 2 | stannous chloride and manganese (II) chloride | 6.2:1.0:1.5 |
| 17 | 2 | cupric acetate | 3.6:1.0 |
| 18 | 2 | dimethyl silicon (IV) dichloride | 2.1:1.0 |
| 19 | 2 | nickel (II) bis [(di-2-ethylhexyl) acid phosphate] | 11.3:1.0 |
| 22 | 4 | lead (II) dichloride | 6.3:1.0 |
| 23 | 4 | aluminum trichloride | 4.1:1.0 |
| 24 | 5 | cupric chloride | 7.3:1.0 |
| 26 | 6 | ferric chloride | 5.1:1.0 |
| 27 | 6 | zinc phosphate | 11.8:1.0 |
| 28 | 6 | nickel (II) bis [(di-2-ethyl hexyl) acid phosphate) | 15.1:1.0 |
| 29 | 7 | cupric acetate | 2.9:1.0 |
| 31 | 7 | magnesium phosphate | 10.2:1.0 |
| 33 | 9 | chromium acetate | 9.1:1.0 |
| 35 | 10 | cupric chloride | 4.1:1.0 |
| 36 | 10 | cupric bis (2-ethylhexyl acid phosphate) | 6.9:1.0 |
| 38 | 11 | stannous bromide | 7.1:1.0 |

TABLE II (continued)

| Compound | Amine Reactant From Table 1 | Metal Salt Reactant | Mole Ratio[1] |
|---|---|---|---|
| 40 | 11 | manganese (II) chloride | 7.2:1.0 |
| 41 | 12 | cupric acetate | 7.6:1.0 |
| 42 | 12 | zirconium (IV) bromide | 17.2:1.0 |
| 43 | 12 | manganese (II) chloride | 3.3:1.0 |
| 44 | 13 | cupric chloride | 4.4:1.0 |
| 45 | 13 | manganese (II) chloride | 4.5:1.0 |
| 46 | 13 | cuprous chloride | 4.0:1.0 |
| 47 | 14 | cupric chloride | 3.6:1.0 |

NOTES:
[1]Refers to mole ratio of amine to metal salt.

Finally, the metal amine complexes obtained as a result of the reactions set forth in Table II above were added to controlled amounts of asphalt cement. The resultant mixtures were then tested and analyzed after 1, 3, 5 and 10 freeze/thaw cycles using known analytical techniques to determine their relative strength characteristics under both "wet" and "dry" conditions. The results of those tests are set forth in Table III below.

TABLE III

| Table No. Compound No.[1] | Dry Tensile Strength $(N/m^2)^2$ | Tensile Strength Ratio[3] 1 FTC[3] | 3 FTC[3] | 5 FTC[3] | 10 FTC[3] |
|---|---|---|---|---|---|
| I—1 | $8.48 \times 10^5$ | .89 | .83 | .79 | .62 |
| II—1 | $8.21 \times 10^5$ | 1.06 | .98 | .92 | .86 |
| II—2 | $9.31 \times 10^5$ | 1.09 | 1.01 | .95 | .92 |
| II—3 | $10.20 \times 10^5$ | 1.07 | 1.06 | 1.00 | .94 |
| II—6 | $9.17 \times 10^5$ | 1.00 | .91 | .84 | .75 |
| II—7 | $10.34 \times 10^5$ | 1.10 | .92 | .81 | .68 |
| I—2 | $8.34 \times 10^5$ | .96 | .81 | .72 | .59 |
| II—10 | $8.83 \times 10^5$ | 1.05 | .91 | .84 | .71 |
| II—11 | $8.62 \times 10^5$ | 1.10 | 1.02 | .97 | .85 |
| II—12 | $9.38 \times 10^5$ | .87 | .74 | .61 | .50 |
| II—13 | $9.17 \times 10^5$ | 1.13 | 1.08 | 0.94 | .90 |
| II—14 | $8.96 \times 10^5$ | 1.15 | 1.11 | 1.04 | 1.01 |
| II—15 | $8.14 \times 10^5$ | .87 | .72 | .65 | .52 |
| II—16 | $9.72 \times 10^5$ | 1.10 | .94 | .83 | .77 |
| II—17 | $9.58 \times 10^5$ | 1.09 | 1.02 | .94 | .90 |
| II—18 | $10.14 \times 10^5$ | 1.13 | 1.04 | 1.09 | 1.03 |
| II—19 | $8.89 \times 10^5$ | 1.02 | .94 | .86 | .77 |
| I—3 | $8.14 \times 10^5$ | .97 | .92 | .87 | .80 |
| II—22 | $9.52 \times 10^5$ | 1.05 | .98 | .90 | .81 |

NOTES:

[1]Each additive is tested at a use level of 0.5% based upon asphalt weight

[2]a) All specimens are of the following formula: 94.5% granite gneiss aggregate 5.5% AC-20 asphalt (containing 0.5 wt% additive)

b) Testing conducted in accordance with the indirect tensile strength measurement of asphalt concrete as described by R. P. Lottman in NCHRP Report 192.

[3]a) Tensile Strength Ratio =

$$\frac{\text{Tensile Strength — Wet Conditioned Specimens}}{\text{Tensile Strength — Dry Conditioned Specimens}}$$

b) FTC = Freeze-Thaw Cycles.

TABLE III (continued)

| Table No. Compound No.[1] | Dry Tensile Strength $(N/m^2)^2$ | 1 FTC[3] | Tensile Strength Ratio[3] 3 FTC[3] | 5 FTC[3] | 10 FTC[3] |
|---|---|---|---|---|---|
| II—23 | $9.45 \times 10^5$ | 1.02 | .94 | .86 | .79 |
| II—24 | $8.69 \times 10^5$ | 1.12 | .97 | .92 | .82 |
| I—6 | $8.48 \times 10^5$ | .96 | .90 | .84 | .76 |
| II—26 | $9.38 \times 10^5$ | 1.03 | .97 | .90 | .80 |
| II—27 | $8.90 \times 10^5$ | 1.02 | .94 | .91 | .84 |
| II—28 | $9.24 \times 10^5$ | 1.07 | .99 | .90 | .91 |
| II—29 | $8.90 \times 10^5$ | .99 | .91 | .86 | .77 |
| I—7 | $8.48 \times 10^5$ | .90 | .80 | .69 | .48 |
| II—31 | $8.14 \times 10^5$ | .91 | .84 | .82 | .71 |
| II—33 | $9.24 \times 10^5$ | .99 | .90 | .79 | .72 |
| II—35 | $8.28 \times 10^5$ | 1.04 | 1.01 | .92 | .87 |
| II—36 | $9.10 \times 10^5$ | 1.14 | 1.09 | 1.02 | .92 |
| II—38 | $8.90 \times 10^5$ | 1.04 | 1.00 | .97 | .90 |
| I—11 | $8.55 \times 10^5$ | .92 | .84 | .80 | .75 |
| II—40 | $10.07 \times 10^5$ | 1.09 | .94 | .90 | .86 |
| I—12 | $8.90 \times 10^5$ | .98 | .92 | .87 | .79 |
| II—41 | $9.24 \times 10^5$ | 1.10 | 1.04 | .95 | .90 |
| II—24 | $9.04 \times 10^5$ | .89 | .80 | .71 | .60 |
| II—43 | $10.21 \times 10^5$ | 1.09 | .98 | .90 | .85 |
| II—44 | $8.83 \times 10^5$ | .91 | .91 | .82 | .79 |
| II—45 | $9.73 \times 10^5$ | .84 | .74 | .69 | .65 |
| II—46 | $8.97 \times 10^5$ | .92 | .90 | .83 | .80 |
| II—47 | $9.31 \times 10^5$ | 1.07 | 1.01 | .92 | .88 |

The comparative strength values set forth in Table III confirm that asphalt compositions containing the metal amine complexes produced in accordance with the present invention exhibit significant increases in overall tensile strength relative to compositions which do not contain such complexes.

In particular, the metal amine complexes of this invention have the unexpected ability to increase the dry tensile strength of asphalt compositions and to further increase the wet tensile strength over the dry strength for these asphalt compositions as compared to asphalt compositions not containing such metal amine complexes as additives. This wet strength increase is evident from Table III for the components which produce asphalt concrete compositions which have a tensile strength ratio greater than 1.0 after one freeze-thaw cycle. Further examination of Table III reveals that the metal amine complexes as additives display superior durability properties to the uncomplexed amine additives despite the lack of any wet strength improvement noted when the metals are used as additives by themselves.

It should be noted that there is considerable fluctuation in properties depending on the amine used, the metal used and the anion used. In general, stannic tetrahalide and silicon tetrahalide tend to give poorer results regardless of the amine.

**Claims for the Contracting States: BE CH DE FR GB IT LI NL SE**

1. A metal amine complex comprising the reaction product of an amine and a salt, characterised in that the amine is at least one species selected from:

A.

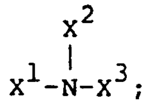

General Formula I

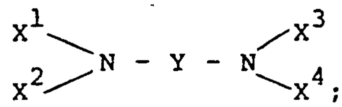

General Formula II

wherein:

i. $X^1$, $X^2$, $X^3$, and $X^4$ are independently selected from:

$-R^1-O-R^5$; $-R^1-O-\overset{O}{\overset{\parallel}{C}}-R^4$; $-\overset{O}{\overset{\parallel}{C}}-R^4$; $-R^1-O-\overset{O}{\overset{\parallel}{C}}-R^3-\overset{O}{\overset{\parallel}{C}}-O-R^2$; $-R^1-NR^5_2$;

$-\overset{O}{\overset{\parallel}{C}}-R^3-\overset{O}{\overset{\parallel}{C}}-O-R^2$; $-R^5$; $-R^1-O-\overset{O}{\overset{\parallel}{C}}-R^3-\overset{O}{\overset{\parallel}{C}}-O-R^1-$; $-R^1(O-R^1)_aO-R^2$;

$(R^1-\underset{R^5}{\underset{|}{N}})_aR^1-NR^5_2$; $(R^1-\underset{R^5}{\underset{|}{N}})_aR^1-O-R^2$; $(R^1-\underset{R^5}{\underset{|}{N}})_a\overset{O}{\overset{\parallel}{C}}-R^5$;

and hydrogen; or $X_1$ and $X_2$ and/or $X_3$ and $X_4$ together with the nitrogen atom to which they are bonded form a 5 or 6-membered ring containing at least one nitrogen atom, the ring optionally containing carbon atoms and, optionally, oxygen atoms and/or further nitrogen atoms, which ring can be substituted by $R^5$, provided that at least one X or one $R^5$ must be hydrogen;

ii. Y is selected from:

$-R(\underset{X^1_b}{\underset{|}{N}}-R^1_c)_a$; $-R^1-$; $-R^1(O-R^1)_a$ or $-R^1-O-\overset{O}{\overset{\parallel}{C}}-R^3-\overset{O}{\overset{\parallel}{C}}-O-R^1$

or forms a six-membered ring with the two nitrogens of general formula II;

iii. R is alkylene of from one to six carbon atoms or a six-membered ring formed with two nitrogen atoms;

iv. $R^1$ is alkylene of from 1 to 20 carbon atoms, cycloalkylene or arylene, optionally substituted by hydroxy, ester or hydrocarbyl;

v. $R^2$ is alkyl of from 1 to 20 carbon atoms, cycloalkyl, aryl, alkaryl or aralkyl, optionally substituted by hydroxy or ester; or hydrogen.

vi. $R^3$ is alkylene, of from 1 to 20 carbon atoms, cycloalkylene of up to 6 carbon atoms, phenylene or naphthylene, optionally substituted by methyl, hydroxyl or ester; or alternatively $R^3$ is

$$-CH=CH-;$$

vii. $R^4$ is alkyl or alkenyl of from 1 to 20 carbon atoms, phenyl, naphthyl, alkaryl, benzyl or cycloalkyl, of up to 6 carbon atoms optionally substituted by hydroxy or ester;

$-R^1(O-R^1)_a\ OR^2$; $(R^1-\underset{R^5}{\underset{|}{N}})_a\ R^1-NR^5_2$; $(R^1-\underset{R^5}{\underset{|}{N}})_a\ R^1-O-R^2$; or $(R^1-\underset{R^5}{\underset{|}{N}})_a\ \overset{O}{\overset{\parallel}{C}}-R^5$.

viii. $R^5$ is alkenyl, alkyl, cycloalkyl, aryl, alkaryl, aralkyl, or any of these substituted by hydroxy, ester, alkyl imidazoline or alkenyl imidazoline; alkyl imidazoline, alkenyl imidazoline, hydrogen or a group having one of the general formulae:

$$-R^1-OH\ ;\quad (R^1-\underset{X^1}{\underset{|}{N}})_a\overset{O}{\overset{\|}{C}}-R^4\ ;\quad -R^1-\underset{X^1_b}{\underset{|}{N}}-R^2_c\ ;\quad -R^1-O-\overset{O}{\overset{\|}{C}}-R^4\ ;$$

$$(R^1-\underset{X^1}{\underset{|}{N}})_aR^1-\underset{X^1_b}{\underset{|}{N}}-R^2_c\ ;\quad (R^1-\underset{X^1}{\underset{|}{N}})_aR^1-O-R^2,\ \text{or}\quad -R^1-O(R^1-O)_aR^2\ ;$$

ix. a is 0 to 6; b is 0,1 or 2; c is 0,1 or 2; and

x. compounds which contain at least two nitrogen atoms are not within the scope of General Formula I if they fall within the scope of General Formula II;

B. a reaction product of A and a formaldehyde source;

C. a reaction product of B and an oxirane selected from alkyl, cycloalkyl, aryl, or cyclohexylene oxiranes;

D. a reaction product of A and an oxirane selected from cycloalkyl, aryl, alkyl, or cyclohexylene oxiranes; and

E. a reaction product of D and a formaldehyde source;

and wherein said salt comprises:

F. at least one metal-containing cation with said metal selected from Groups IIA, IVB, VIB (except molybdenum), VIIB, VIII, IB, IIB, IIIA, or IVA of the Periodic Table; mono- or dialkyltin; and mono-, di-, or trialkylsilicon; and

G. at least one anion selected from chloride, bromide, hydroxy, sulphate, derivatives of phosphoric and phosphorous acids and carboxylates having one of the formulae:

$$-O-\overset{O}{\overset{\|}{C}}-R^2\ ;\quad -O-\overset{O}{\overset{\|}{C}}-R^3-\overset{O}{\overset{\|}{C}}-O-R^4\quad \text{or}\quad -O-\overset{O}{\overset{\|}{C}}-R^3-\overset{O}{\overset{\|}{C}}-O-$$

but excluding carboxylates having 7 or more carbon atoms.

2. A metal amine complex according to claim 1, wherein said at least one cation is a metal ion.

3. A metal amine complex according to claim 1, wherein said cation is copper; tin; mono- or dialkyltin; mono-, di- or trialkylsilicon; or manganese.

4. A metal amine complex according to claim 1, wherein if the said amine is of General Formula I it has at least two amino nitrogen atoms and if the said amine is of General formula II, any alkyl group attached to an amino nitrogen is methyl.

5. A metal amine complex according to claim 1, wherein the metal is tin or silicon and the anion is other than tetrahalide.

6. A composition comprising:

A. a metal amine complex according to any preceding claim and B. an asphalt.

7. A composition according to claim 6, further comprising a filler.

8. A composition according to claim 7, wherein the filler comprises mineral aggregate, the amount of said complex being at least 0.2 weight % based on the asphalt.

9. A composition according to claim 7 wherein the filler comprises glass fibres.

10. A composition according to claim 7, wherein the filler comprises a glass fibre mesh.

11. A composition according to any one of claims 6 to 10 wherein said metal amine complex has the structure of General Formula II and is free of alkyl groups attached to any amino nitrogen atom.

12. A method of making a high-tensile strength asphalt-coated filler composition, which comprises mixing an asphalt with a metal amine complex according to any one of claims 1 to 5 to form a coating mixture and subsequently coating a filler with the coating mixture.

13. A method according to claim 12 wherein the filler is a mineral aggregate.

14. A method according to claim 12 wherein the filler comprises glass fibres.

15. A method according to claim 12 wherein the filler is a glass fibre mesh.

**Claims for the Contracting State: AT**

1. A method for forming a metal amine complex which comprises reacting an amine with a salt, characterised in that the amine is at least one species selected from:

A.

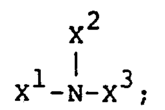

General Formula I

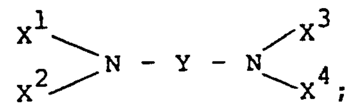

General Formula II

i. $X^1$, $X^2$, $X^3$, and $X^4$ are independently selected from:

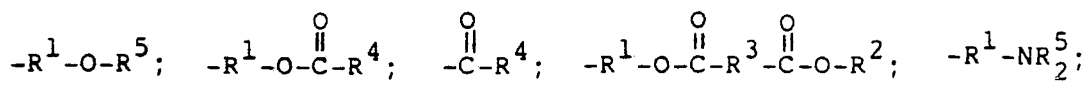

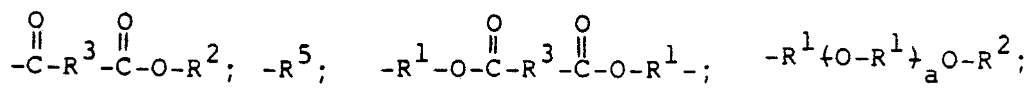

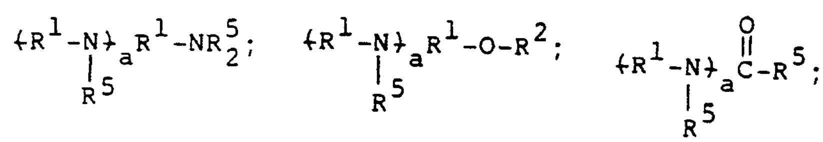

and hydrogen; or $X_1$ and $X_2$ and/or $X_3$ and $X_4$ together with the nitrogen atom to which they are bonded form a 5 or 6-membered ring containing at least one nitrogen atom, the ring optionally containing carbon atoms and, optionally, oxygen atoms and/or further nitrogen atoms, which ring can be substituted by $R^5$, provided that at least one X or one $R^5$ must be hydrogen;

ii. Y is selected from:

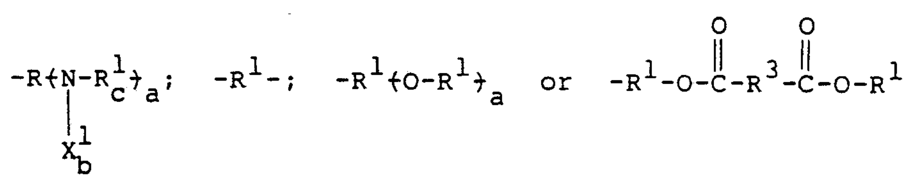

or forms a six-membered ring with the two nitrogens of general formula II;

iii. R is alkylene of from one to six carbon atoms or a six-membered ring formed with two nitrogen atoms;

iv. $R^1$ is alkylene of from 1 to 20 carbon atoms, cycloalkylene or arylene, optionally substituted by hydroxy, ester or hydrocarbyl;

v. $R^2$ is alkyl of from 1 to 20 carbon atoms, cycloalkyl, aryl, alkaryl or aralkyl, optionally substituted by hydroxy or ester; or hydrogen.

vi. $R^3$ is alkylene, of from 1 to 20 carbon atoms, cycloalkylene of up to 6 carbon atoms, phenylene or naphthylene, optionally substituted by methyl, hydroxyl or ester; or alternatively $R^3$ is

$$—CH=CH—;$$

vii. $R^4$ is alkyl or alkenyl of from 1 to 20 carbon atoms, phenyl, naphthyl, alkaryl, benzyl or cycloalkyl, of up to 6 carbon atoms optionally substituted by hydroxy or ester;

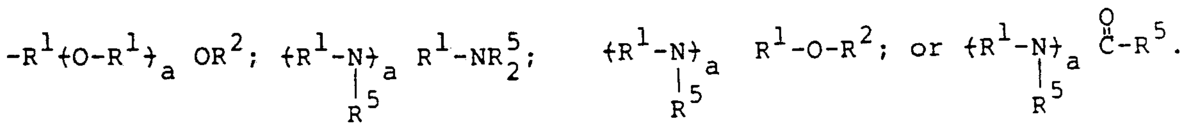

viii. $R^5$ is alkenyl, alkyl, cycloalkyl, aryl, alkaryl, aralkyl, or any of these substituted by hydroxy, ester, alkyl imidazoline or alkenyl imidazoline; alkyl imidazoline, alkenyl imidazoline, hydrogen or a group having one of the general formulae:

$-R^1-OH$; 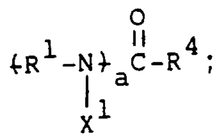 ; 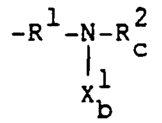 ; 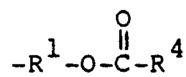 ;

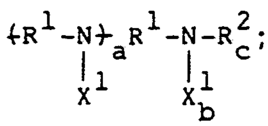 ; 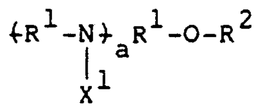 ; $-R^1-O(R^1-O)_aR^2$;

ix. a is 0 to 6; b is 0,1 or 2; c is 0,1 or 2; and

x. compounds which contain at least two nitrogen atoms are not within the scope of General Formula I if they fall within the scope of General Formula II;

B. a reaction product of A and a formaldehyde source;

C. a reaction product of B and an oxirane selected from alkyl, cycloalkyl, aryl, or cyclohexylene oxiranes;

D. a reaction product of A and an oxirane selected from cycloalkyl, aryl, alkyl, or cyclohexylene oxiranes; and

E. a reaction product of D and a formaldehyde source;

and wherein said salt comprises:

F. at least one metal-containing cation with said metal selected from Groups IIA, IVB, VIB (except molybdenum), VIIB, VIII, IB, IIB, IIIA, or IVA of the Periodic Table; mono- or dialkyltin; and mono-, di-, or trialkylsilicon; and

G. at least one anion selected from chloride, bromide, hydroxy, sulphate, derivatives of phosphoric and phosphorous acids and carboxylates having one of the formulae:

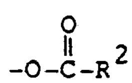 ; 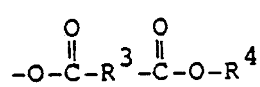 or 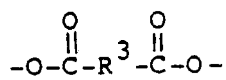

but excluding carboxylates having 7 or more carbon atoms.

2. A method according to claim 1, wherein said cation (F) is a metal ion.

3. A method according to claim 1, wherein said cation (F) is copper; tin; mono- or dialkyltin; mono-, di- or trialkylsilicon; or manganese.

4. A method according to claim 1, wherein if the said amine is of General Formula I it has at least two amino nitrogen atoms and if the said amine is of General Formula II, any alkyl group attached to an amino nitrogen is methyl.

5. A method according to claim 1, wherein the metal is tin or silicon and the anion is other than tetrahalide.

6. A composition comprising:

A. a metal amine complex made by a method according to any preceding claim and B. an asphalt.

7. A composition according to claim 6, further comprising a filler.

8. A composition according to claim 7, wherein the filler comprises mineral aggregate, the amount of said complex being at least 0.2 weight % based on the asphalt.

9. A composition according to claim 7 wherein the filler comprises glass fibres.

10. A composition according to claim 7, wherein the filler comprises a glass fibre mesh.

11. A composition according to any one of claims 6 to 10 wherein said metal amine complex has the structure of General Formula II and is free of alkyl groups attached to any amino nitrogen atom.

12. A method of making a high-tensile strength asphalt-coated filler composition, which comprises mixing an asphalt with a metal amine complex according to any one of claims 1 to 5 to form a coating mixture and subsequently coating a filler with the coating mixture.

13. A method according to claim 12 wherein the filler is a mineral aggregate.

14. A method according to claim 12 wherein the filler comprises glass fibres.

15. A method according to claim 12 wherein the filler is a glass fibre mesh.

**Patentansprüche für die Vertragsstaaten: BE CH DE FR GB IT LI NL SE**

1. Metallaminkomplex, der das Reaktionsprodukt eines Amins und eines Salzes umfaßt, dadurch gekennzeichnet, daß das Amin wenigstens eines der folgenden ist:

A.

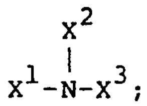

allgemeine Formel I

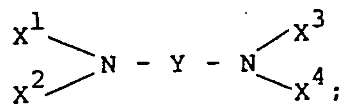

allgemeine Formel II

worin folgendes gilt:

i. $X^1$, $X^2$, $X^3$ und $X^4$ sind unabhängig voneinander unter den folgenden Gruppen ausgewählt:

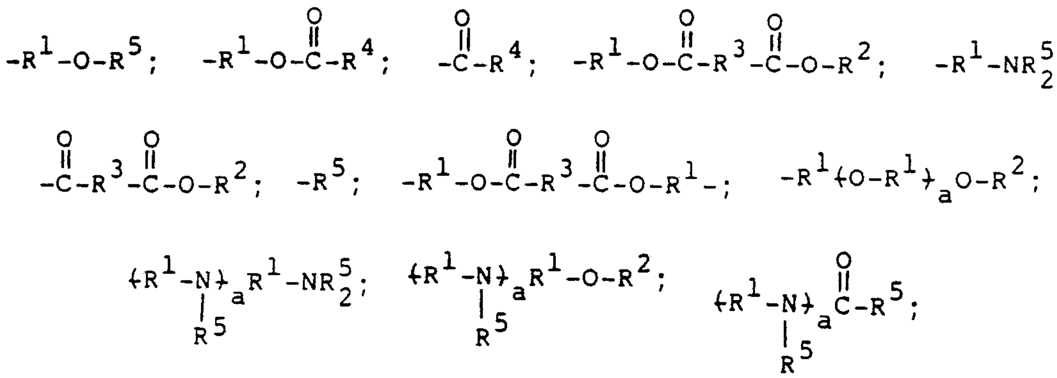

und Wasserstoff, oder X und $X^2$ und/oder $X^3$ und $X^4$ bilden zusammen mit dem Stickstoffatom, an das sie gebunden sind, einen 5- oder 6-gliedrigen Ring, der wenigstens ein Stickstoffatom enthält, wobei der Ring gegebenenfalls Kohlenstoffatome und gegebenenfalls Sauerstoffatome und/oder weitere Stickstoffatome enthält und durch $R^5$ substituiert sein kann, vorausgesetzt, daß wenigstens ein X oder ein $R^5$ Wasserstoff sein muß;

ii. Y ist unter folgenden Gruppen ausgewählt:

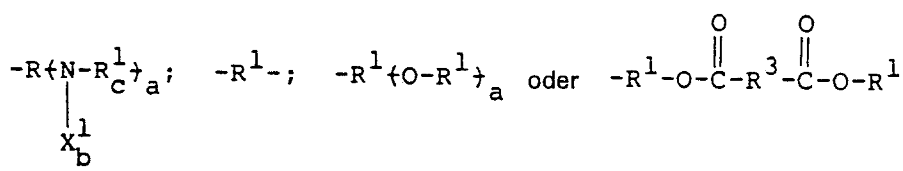

oder bildet einen 6-gliedrigen Ring mit den beiden Stickstoffatomen der allgemeinen Formel II;

iii. R ist Alkylen mit ein bis sechs Kohlenstoffatomen oder ein 6-gliedriger Ring, der mit zwei Stickstoffatomen gebildet ist;

iv. $R^1$ ist Alkylen mit 1 bis 20 Kohlenstoffatomen, Cycloalkylen oder Arylen, gegebenenfalls durch Hydroxy, Estergruppen oder Kohlenwasserstoffgruppen substituiert;

v. $R^2$ ist Alkyl mit 1 bis 20 Kohlenstoffatomen, Cycloalkyl, Aryl, Alkaryl oder Aralkyl, gegebenenfalls substituiert durch Hydroxy oder Estergruppen; oder Wasserstoff;

vi. $R^3$ ist Alkylen mit 1 bis 20 Kohlenstoffatomen, Cycloalkylen mit bis zu sechs Kohlenstoffatomen, Phenylen oder Naphthylen, gegebenenfalls substituiert durch Methyl, Hydroxyl oder Estergruppen, oder stattdessen ist $R^3$ —CH=CH—;

vii. $R^4$ ist Alkyl oder Alkenyl mit 1 bis 20 Kohlenstoffatomen, Phenyl, Naphthyl, Benzyl oder Cycloalkyl mit bis zu sechs Kohlenstoffatomen, gegebenenfalls substituiert durch Hydroxy oder Estergruppen; oder

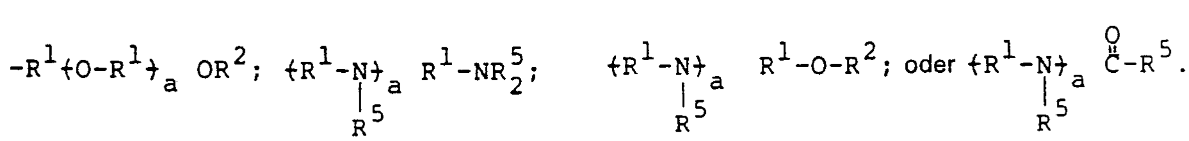

viii. $R^5$ ist Alkenyl, Alkyl, Cycloalkyl, Aryl, Alkaryl, Aralkyl oder eine dieser Gruppen durch Hydroxy, Estergruppen, Alkylgruppen, Imidazolin- oder Alkenylimidazolingruppen substituiert; Alkylimidazolin,

Alkenylimidazolin, Wasserstoff oder eine Gruppe mit einer der folgenden allgemeinen Formeln:

$-R^1-OH$; 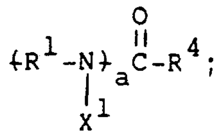; 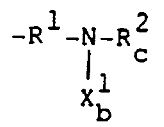; 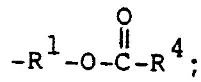;

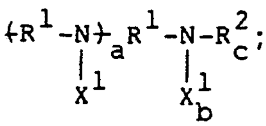; 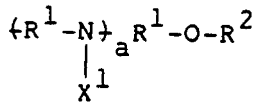, oder $-R^1-O(R^1-O)_aR^2$;

ix. a ist 0 bis 6, b ist 0, 1 oder 2; c ist 0, 1 oder 2; und

x. Verbindungen, die wenigstens zwei Stickstoffatome enthalten, liegen nicht innerhalb der allgemeinen Formel I, wenn sie unter die allgemeine Formel II fallen;

B. ein Reaktionsprodukt von A und einer Formaldehydquelle;

C. ein Reaktionsprodukt von B und eines Oxirans, das unter Alkyl-, Cycloalkyl-, Aryl- oder Cyclohexylenoxiranen ausgewählt ist;

D. ein Reaktionsprodukt von A und eines Oxirans, das unter Cycloalkyl-, Aryl-, Alkyl- oder Cyclohexylenoxiranen ausgewählt ist, und

E. ein Reaktionsprodukt von D und einer Formaldehydquelle;

und worin das Salz folgendes umfaßt:

F. wenigstens ein metallhaltiges Kation, dessen Metall aus den Gruppen IIA, IVB, VIB (ausgenommen Molybdän), VIIB, VIII, IB, IIB, IIIA oder IVA des Periodensystems der Elemente ausgewählt ist, Mono- oder Dialkylzinn und Mono-, Di- oder Trialkylsilicium; und

G. wenigstens ein Anion, das unter Chlorid, Bromid, Hydroxy, Sulfat, einem Derivat von Phosphorsäure oder Phosphoriger Säure und Carboxylaten mit einer der Formeln

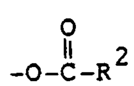 ; 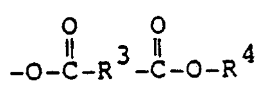 oder 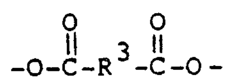

doch ausgenommen Carboxylate mit sieben oder mehr Kohlenstoffatomen, ausgewählt ist.

2. Metallaminkomplex nach Anspruch 1, worin das wenigstens eine Kation ein Metallion ist.

3. Metallaminkomplex nach Anspruch 1, worin das Kation Kupfer, Zinn, Mono- oder Dialkylzinn, Mono-, Di- oder Tetraalkylsilicium oder Mangan ist.

4. Metallaminkomplex nach Anspruch 1, worin, wenn das Amin die allgemeine Formel I hat, es wenigstens zwei Aminostickstoffatome besitzt, und wenn das Amin die allgemeine Formel II hat, irgendeine an ein Aminostickstoffatom gebundene Gruppe Metehyl ist.

5. Metallaminkomplex nach Anspurch 1, woring das Metall Zinn oder Silicium ist und das Anion von Tetrahalogenid verschieden ist.

6. Zusammensetzung mit:

A. einem Metallaminkomplex nach einem der vorausgehenden Ansprüche und

B. einem Asphalt.

7. Zusammensetzung nach Anspruch 6, die zusätzlich einen Füllstoff enthält.

8. Zusammensetzung nach Anspruch 7, worin der Füllstoff mineralischen Zuschlagstoff umfaßt, wobei die Menge des Komplexes wenigstens 0,2 Gew.-%, bezogen auf den Asphalt, ist.

9. Zusammensetzung nach Anspruch 7, worin der Füllstoff Glasfasern umfaßt.

10. Zusammensetzung nach Anspruch 7, woring der Füllstoff ein Glasfasergeflecht umfaßt.

11. Zusammensetzung nach einem der Ansprüche 6 bis 10, worin der Metallaminkomplex die Struktur der allgemeinen Formel II hat und frie von Alkylgruppen ist, die an irgendein Aminostickstoffatom gebunden sind.

12. Verfahren zur Herstellung einer asphaltbeschichteten Füllstoffzusammensetzung mit hoher Zugfestigkeit, indem man einen Asphalt mit einem Metallaminkomplex nach einem der Ansprüche 1 bis 5 vermischt und so ein Überzugsgemisch bildet und anschließend einen Füllstoff mit dem Überzugsgemisch überzieht.

13. Verfahren nach Anspruch 12, bei dem der Füllstoff ein mineralischer Zuschlagstoff ist.

14. Verfahren nach Anspruch 12, bei dem der Füllstoff Glasfasern umfaßt.

15. Verfahren nach Anspruch 12, bei dem der Füllstoff ein Glasfasergeflecht ist.

**Patentansprüche für den Vertragsstaat: AT**

1. Verfahren zur Herstellung eines Metallaminkomplexes durch Umsetzung eines Amins mit einem Salz, dadurch gekennzeichnet, daß das Amin wenigstens eines der folgenden ist:

A.

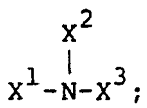

allgemeine Formel I

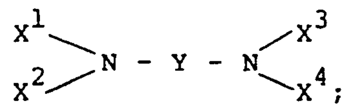

allgemeine Formel II

worin folgendes gilt:

i. $X^1$, $X^2$, $X^3$ und $X^4$ sind unabhängig voneinander unter den folgenden Gruppen ausgewählt:

$-R^1-O-R^5$; $-R^1-O-\overset{O}{\overset{\|}{C}}-R^4$; $-\overset{O}{\overset{\|}{C}}-R^4$; $-R^1-O-\overset{O}{\overset{\|}{C}}-R^3-\overset{O}{\overset{\|}{C}}-O-R^2$; $-R^1-NR^5_2$;

$-\overset{O}{\overset{\|}{C}}-R^3-\overset{O}{\overset{\|}{C}}-O-R^2$; $-R^5$; $-R^1-O-\overset{O}{\overset{\|}{C}}-R^3-\overset{O}{\overset{\|}{C}}-O-R^1-$; $-R^1(O-R^1)_aO-R^2$;

$(R^1-\underset{R^5}{\underset{|}{N}})_aR^1-NR^5_2$; $(R^1-\underset{R^5}{\underset{|}{N}})_aR^1-O-R^2$; $(R^1-\underset{R^5}{\underset{|}{N}})_a\overset{O}{\overset{\|}{C}}-R^5$;

und Wasserstoff, oder $X^1$ und $X^2$ und/oder $X^3$ und $X^4$ bilden zusammen mit dem Stickstoffatom, an das sie gebunden sind, einen 5- oder 6-gliedrigen Ring, der wenigstens ein Stickstoffatom enthält, wobei der Ring gegebenenfalls Kohlenstoffatome und gegebenenfalls Sauerstoffatome und/oder weitere Stickstoffatome enthält und durch $R^5$ substituiert sein kann, vorausgesetzt, daß wenigstens ein X oder ein $R^5$ Wasserstoff sein muß;

ii. Y ist under folgenden Gruppen ausgewählt:

$-R(\underset{X^1_b}{\underset{|}{N}}-R^1_c)_a$; $-R^1-$; $-R^1(O-R^1)_a$ oder $-R^1-O-\overset{O}{\overset{\|}{C}}-R^3-\overset{O}{\overset{\|}{C}}-O-R^1$

oder bildet einen 6-gliedrigen Ring mit den beiden Stickstoffatomen der allgemeinen Formel II;

iii. R ist Alkylen mit ein bis sechs Kohlenstoffatomen oder ein 6-gliedriger Ring, der mit zwei Stickstoffatomen gebildet ist;

iv. $R^1$ ist Alkylen mit 1 bis 20 Kohlenstoffatomen, Cycloalkylen oder Arylen, gegebenenfalls durch Hydroxy, Estergruppen oder Kohlenwasserstoffgruppen substituiert;

v. $R^2$ ist Alkyl mit 1 bis 20 Kohlenstoffatomen, Cycloalkyl, Aryl, Alkaryl oder Aralkyl, gegebenenfalls substituiert durch Hydroxy oder Estergruppen; oder Wasserstoff;

vi. $R^3$ ist Alkylen mit 1 bis 20 Kohlenstoffatomen, Cycloalkylen mit bis zu sechs Kohlenstoffatomen, Phenylen oder Naphthylen, gegebenenfalls substituiert durch Methyl, Hydroxyl oder Estergruppen, oder stattdessen ist $R^3$ —CH=CH—;

vii. $R^4$ ist Alkyl oder Alkenyl mit 1 bis 20 Kohlenstoffatomen, Phenyl, Naphthyl, Benzyl oder Cycloalkyl mit bis zu sechs Kohlenstoffatomen, gegebenenfalls substituiert durch Hydroxy oder Estergruppen; oder

$-R^1(O-R^1)_a\ OR^2$; $(R^1-\underset{R^5}{\underset{|}{N}})_a\ R^1-NR^5_2$; $(R^1-\underset{R^5}{\underset{|}{N}})_a\ R^1-O-R^2$; oder $(R^1-\underset{R^5}{\underset{|}{N}})_a\ \overset{O}{\overset{\|}{C}}-R^5$.

viii. $R^5$ ist Alkenyl, Alkyl, Cycloalkyl, Aryl, Alkaryl, Aralkyl oder eine dieser Gruppen durch Hydroxy, Estergruppen, Alkylgruppen, Imidazolin- oder Alkenylimidazolingruppen substituiert; Alkylimidazolin,

Alkenylimidazolin, Wasserstoff oder eine Gruppe mit einer der folgenden allgemeinen Formeln:

$-R^1-OH$ ; 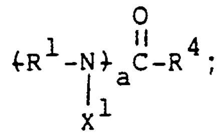 ; 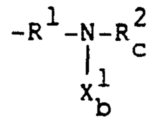 ; 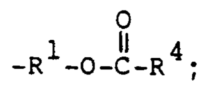 ;

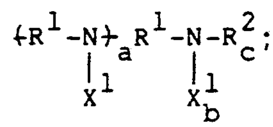 ; 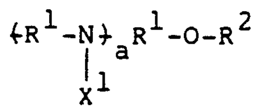, oder $-R^1-O(R^1-O)_aR^2$ ;

ix. a ist 0 bis 6, b ist 0, 1 oder 2; c ist 0, 1 oder 2; und

x. Verbindungen, die wenigstens zwei Stickstoffatome enthalten, liegen nicht innerhalb der allgemeinen Formel I, wenn sie unter die allgemeine Formel II fallen;

B. ein Reaktionsprodukt von A und einer Formaldehydquelle;

C. ein. Reaktionsprodukt von B und eines Oxirans, das unter Alkyl-, Cycloalkyl-, Aryl- oder Cyclohexylenoxiranen ausgewählt ist;

D. ein Reaktionsprodukt von A und eines Oxirans, das unter Cycloalkyl-, Aryl-, Alkyl- oder Cyclohexylenoxiranen ausgewählt ist, und

E. ein Reaktionsprodukt von D und einer Formaldehydquelle;

und worin das Salz folgendes umfaßt:

F. wenigstens ein metallhaltiges Kation, dessen Metall aus den Gruppen IIA, IVB, VIB (ausgenommen Molybdän), VIIB, VIII, IB, IIB, IIIA oder IVA des Periodensystems der Elemente ausgewählt ist, Mono- oder Dialkylzinn und Mono-, Di- oder Trialkylsilicium; und

G. wenigstens ein Anion, das unter Chlorid, Bromid, Hydroxy, Sulfat, einem Derivat von Phosphorsäure oder Phosphoriger Säure und Carboxylaten mit einer der Formeln

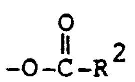 ; 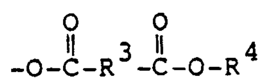 oder 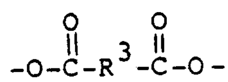

doch ausgenommen Carboxylate mit sieben oder mehr Kohlenstoffatomen, ausgewählt ist.

2. Verfahren nach Anspruch 1, worin das Kation (F) ein Metallion ist.

3. Verfahren nach Anspruch 1, worin das Kation (F) Kupfer, Zinn, Mono- oder Dialkylzinn, Mono-, Di- oder Trialkylsilicium oder Mangan ist.

4. Verfahren nach Anspruch 1, bei dem, wenn das Amin die allgemeine Formel I hat, es wenigstens zwei Aminostickstoffatome besitzt, und wenn das Amin die allgemein Formel II hat, eine an ein Aminostickstoff gebundene Alkylgruppe Methyl ist.

5. Verfahren nach Anspruch 1, bei dem das Metall Zinn oder Silicium ist und das Anion von Tetrahalogenid Verschieden ist.

6. Zusammensetzung mit:

A. einem Metallaminkomplex, der nach einer Methode nach einem der vorausgehenden Ansprüche hergestellt wurde, und

B. einem Asphalt.

7. Zusammensetzung nach Anspruch 6, die zusätzlich einen Füllstoff umfaßt.

8. Zusammensetzung nach Anspruch 7, bei der der Füllstoff mineralischen Zuschlagstoff umfaßt, wobei die Menge des Komplexes wenigstens 0,2 Gew.-%, bezogen auf den Asphalt, ist.

9. Zusammensetzung nach Anspruch 7, bei der der Füllstoff Glasfasern umfaßt.

10. Zusammensetzung nach Anspruch 7, bei der der Füllstoff ein Glasfasergeflecht umfaßt.

11. Zusammensetzung nach einem der Ansprüche 6 bis 10, bei der Metallaminkomplex die Struktur allgemeinen Formel II hat und frei von an ein Aminostickstoff gebundenen Alkylgruppen ist.

12. Verfahren zur Herstellung einer asphaltbeschichteten Füllstoffzusammensetzung mit hoher Zugfestigkeit, bei dem man einen Asphalt mit einem Metallaminkomplex, der nach einem Verfahren nach einem der Ansprüche 1 bis 5 hergestellt wurde, unter Bildung eines Überzugsgemisches vermischt und anschließend einen Füllstoff mit dem Überzugsgemisch überzieht.

13. Verfahren nach Anspruch 12, bei dem der Füllstoff ein mineralischer Zuschlagstoff ist.

14. Verfahren nach Anspruch 12, bei dem der Füllstoff Glasfasern umfaßt.

15. Verfahren nach Anspruch 12, bei dem der Füllstoff ein Glasfasergeflecht ist.

**Revendications pour les Etats contractants: BE CH DE FR GB IT NL SE**

1. Complexe métal/amine comprenant le produit de réaction d'une amine et d'un sel, caractérisé en ce que l'amine est au moins espèce choisie parmi

A.

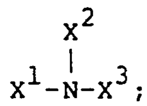

Formule générale I

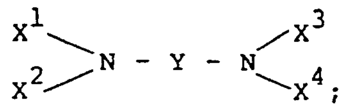

Formule générale II

où

i. $X^1$, $X^2$, $X^3$ et $X^4$ sont choisis indépendamment parmi:

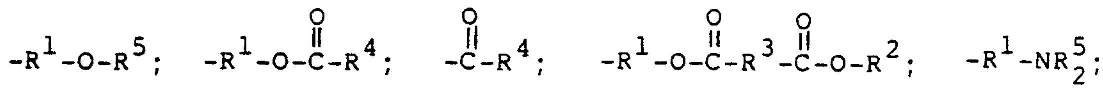

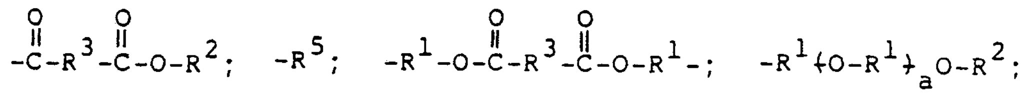

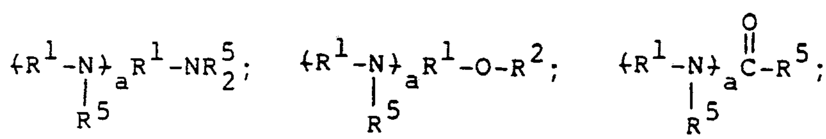

et l'hydrogène, ou bien

$X^1$ et $X^2$ et/ou $X^3$ et $X^4$ conjointement avec l'atome d'azote auquel ils sont unis forment un cycle de 5 ou 6 chaînons contenant au moins un atome d'azote, le cycle contenant facultativement des atomes de carbone et, facultativement, des atomes d'oxygène et/ou d'autres atomes d'azote, lequel cycle peut être substitué par $R^5$, avec la restriction qu'au moins un X ou un $R^5$ doit être l'hydrogène;

ii. Y est choisi parmi:

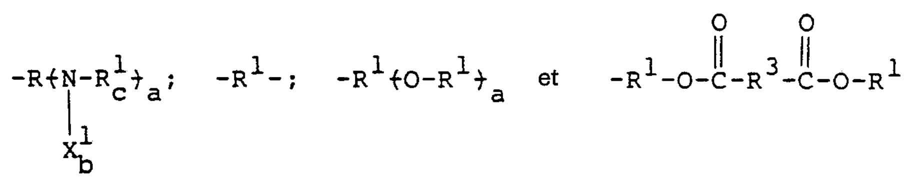

ou forme un cycle de six chaînons avec les deux atomes d'azote de la formule genérale II;

iii. R est un radical alcoylène de 1 à 6 atomes de carbone ou un cycle de six chaînons formé avec deux atomes d'azote;

iv. $R^1$ est un radical alcoylène de 1 à 20 atomes de carbone, cycloalcoylène ou arylène, éventuellement substitué par hydroxyle, ester ou hydrocarbyle;

v. $R^2$ est un radical alcoyle de 1 à 20 atomes de carbone, cycloalcoyle, aryle, alcaryle ou aralcoyle, éventuellement substitué par hydroxyle ou ester; ou un atome d'hydrogène;

vi. $R^3$ est un radical alcoylène de 1 à 20 atomes de carbone, cycloalcoylène comptant jusqu'à 6 atomes de carbone, phénylène ou naphtylène, éventuellement substitué par méthyle, hydroxyle ou ester; ou en variante $R^3$ représente —CH=CH—;

vii. $R^4$ est un radical alcoyle ou alcényle de 1 à 20 atomes de carbone, phényle, naphtyle, benzyle ou cycloalcoyle comptant jusqu'à 6 atomes de carbone, éventuellement substitué par hydroxyle ou ester; ou bien

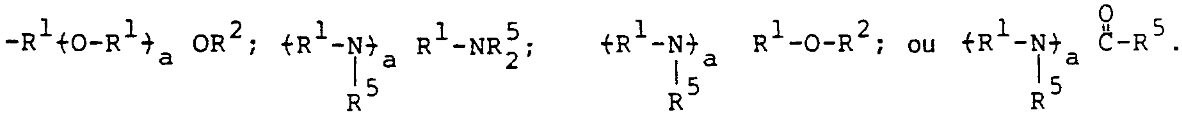

viii. $R^5$ est un radical alcényle, alcoyle, cycloalcoyle, aryle, alcaryle, aralcoyle ou l'un quelconque de ces radicaux substitué par hydroxyle, ester, alcoylimidazoline ou alcényl-imidazoline; alcoyl-imidazoline,

alcényl-imidazoline; ou un atome d'hydrogène; ou bien un radical de l'une des formules générales:

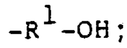 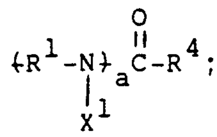 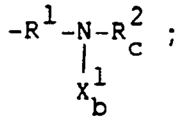 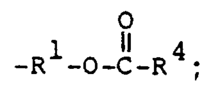

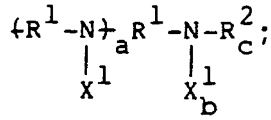 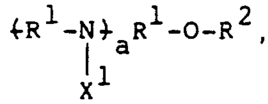 ou 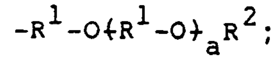

ix. a est 0 à 6; b est 0, 1 ou 2 et c est 0, 1 ou 2, et

x. les composés qui contiennent au moins deux atomes d'azote n'entrant pas dans le cadre de la formule générale I s'ils entrent dans le cadre de la formule générale II;

B. un produit de réaction de A et d'une source de formaldéhyde;

C. un produit de réaction de B et d'un oxirane choisi parmi les alcoyl-, cycloalcoyl-, aryl- ou cyclohexylène oxiranes;

D. un produit de réaction de A et d'un oxirane choisi parmi cycloalcoyl-, aryl-, alcoyl- ou cyclohexylène oxiranes, et

E. un produit de réaction de D et d'une source de formaldéhyde;

et en ce que le sel comprend:

F. au moins un cation métallifère dont le métal est choisi dans les groupes IIA, IVB, VIB (à l'exception du molybdène), VIIB, VIII, IB, IIB, IIIA et IVA du tableau périodique, outre parmi mono- ou dialcoylétain et mono-, di- ou trialcoylsilicium, et

G. au moins un anion choisi parmi chlorure, bromure, hydroxyle, sulfate, dérivés d'acide phosphorique et d'acide phosphoreux et carboxylates de l'une de formules:

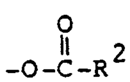 ; 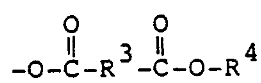 ou 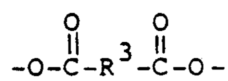

mais à l'exclusion des carboxylates comptant 7 atomes de carbone ou davantage.

2. Complexe métal/amine suivant la revendication 1, dans lequel le cation au moins unique est un ion métallique.

3. Complexe métal/amine suivant la revendication 1, dans lequel le cation est un cation cuivre, étain, mono- ou dialcoylétain, mono-, di- ou trialcoylsilicium, ou manganèse.

4. Complexe métal/amine suivant la revendication 1, dans lequel si l'amine est de formule générale I, elle comprend au moins deux atomes d'azote de fonction amino et si l'amine est de formule générale II, tout radical alcoyle uni à un atome d'azote de fonction amino est un radical méthyle.

5. Complexe métal/amine suivant la revendication 1, dans lequel le métal est l'étain ou le silicium et l'anion est autre que tétrahalogénure.

6. Composition comprenant:

A. un complexe métal/amine suivant l'une quelconque des revendications précédentes, et

B. un bitume.

7. Composition suivant la revendication 6, comprenant en outre une charge.

8. Composition suivant la revendication 7, dans laquelle la charge comprend un granulat minéral, la quantité du complex étant d'au moins, 0,2% en poids sur base du bitume.

9. Composition suivant la revendication 7, dans laquelle la charge comprend des fibres de verre.

10. Composition suivant la revendication 7, dans laquelle la charge comprend un filet de fibres de verre.

11. Composition suivant l'une quelconque des revendications 6 à 10, dans laquelle le complexe métal/amine a la structure de formule générale II et est exempt de radicaux alcoyle unis à un atome d'azote de fonction amino quelconque.

12. Procédé pour préparer une composition de charge enrobée de bitume à haute résistance en traction, qui comprend le mélange d'un bitume avec un complexe métal/amine suivant l'une quelconque des revendications 1 à 5 pour la formation d'un mélange d'enrobage et ensuite l'enrobage d'une charge au moyen du mélange d'enrobage.

13. Procédé suivant la revendication 12, dans lequel la charge est un granulat minéral.

14. Procédé suivant la revendication 12, dans lequel la charge comprend des fibres de verre.

15. Procédé suivant la revendication 12, dans lequel la charge est un filet de fibres de verre.

**Revendications pour les Etats contractant: AT**

1. Procédé pour former un complex métal/amine, qui comprend la réaction d'une amine avec un sel, caractérisé en ce que l'amine est au moins une espèce choisie parmi

A.

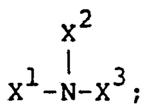

Formule générale I

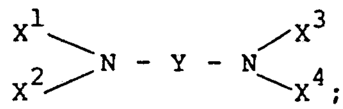

Formule générale II

où

i. $X^1$, $X^2$, $X^3$ et $X^4$ sont choisis indépendamment parmi:

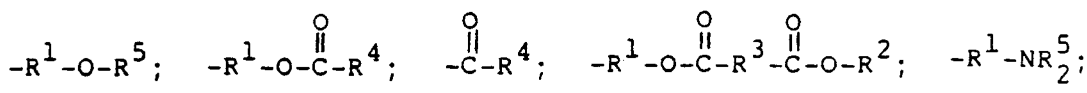

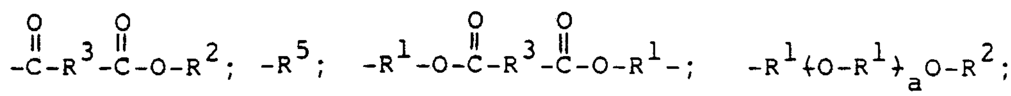

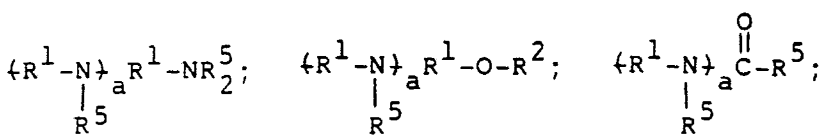

et l'hydrogène, ou bien

$X^1$ et $X^2$ et/ou $X^3$ et $X^4$ conjointement avec l'atome d'azote auquel ils sont unis forment un cycle de 5 ou 6 chaînons contenant au moins un atome d'azote, le cycle contenant facultativement des atomes de carbone et, facultativement, des atomes d'oxygène et/ou d'autres atomes d'azote, lequel cycle peut être substitué par $R^5$, avec la restriction qu'au moins un X ou un $R^5$ doit être l'hydrogène;

ii. Y est choisi parmi:

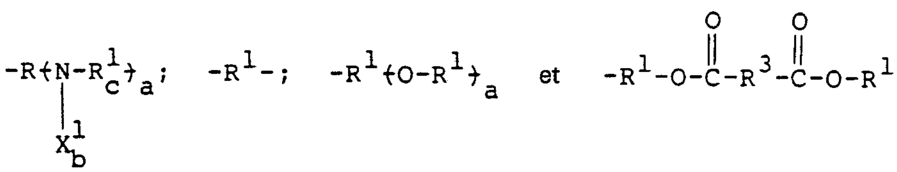

ou forme un cycle de six chaînons avec les deux atomes d'azote de la formule générale II;

iii. R est un radical alcoylène de 1 à 6 atomes de carbone ou un cycle de six chaînons formé avec deux atomes d'azote;

iv. $R^1$ est un radical alcoylène de 1 à 20 atomes de carbone, cycloalcoylène ou arylène, éventuellement substitué par hydroxyle, ester ou hydrocarbyle;

v. $R^2$ est un radical alcoyle de 1 à 20 atomes de carbone, cycloalcoyle, aryle, alcaryle ou aralcoyle, éventuellement substitué par hydroxyle ou ester; ou un atome d'hydrogène;

vi. $R^3$ est un radical alcoylène de 1 à 20 atomes de carbone, cycloalcoylène comptant jusqu'à 6 atomes de carbone, phénylène ou naphtylène, éventuellement substitué par méthyle, hydroxyle ou ester; ou en variante $R^3$ représente —CH=CH—;

vii. $R^4$ est un radical alcoyle ou alcényle de 1 à 20 atomes de carbone, phényle, naphtyle, benzyle ou cycloalcoyle comptant jusqu'à 6 atomes de carbone, éventuellement substitué par hydroxyle ou ester; ou bien

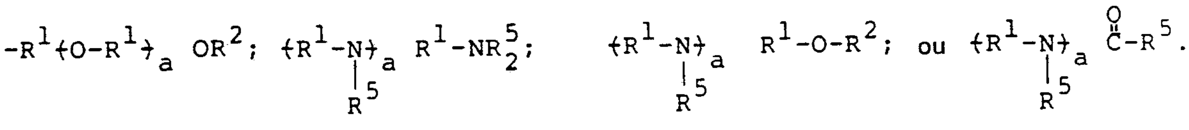

viii. $R^5$ est un radical alcényle, alcoyle, cycloalcoyle, aryle, alcaryle, aralcoyle ou l'un quelconque de ces radicaux substitué par hydroxyle, ester, alcoylimidazoline ou alcényl-imidazoline; alcoyl-imidazoline,

alcényl-imidazoline; ou un atome d'hydrogène; ou bien un radical de l'une des formules générales:

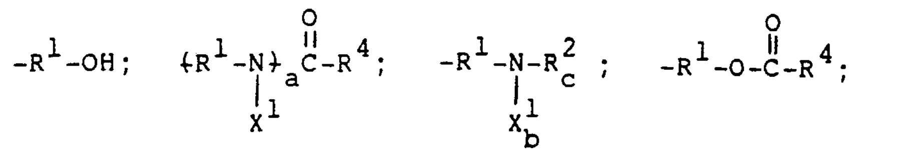

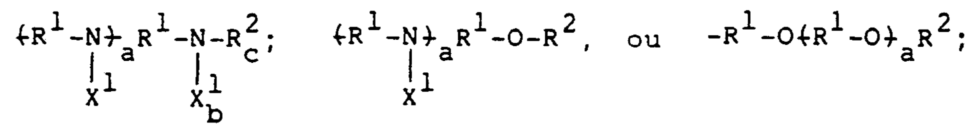

ou

ix. a est 0 à 6; b est 0, 1 ou 2 et c est 0, 1 ou 2, et

x. les composés qui contiennent au moins deux atomes d'azote n'entrant pas dans le cadre de la formule générale I s'ils entrent dans le cadre de la formule générale II;

B. un produit de réaction de A et d'une source de formaldéhyde;

C. un produit de réaction de B et d'un oxirane choisi parmi les alcoyl-, cycloalcoyl-, aryl- ou cyclohexylène oxiranes;

D. un produit de réaction de A et d'un oxirane choisi parmi cycloalcoyl-, aryl-, alcoyl- ou cyclohexylène oxiranes, et

E. un produit de réaction de D et d'une sources de formaldéhyde;

et en ce que le sel comprend:

F. au moins un cation métallifère dont le métal est choisi dans les groups IIA, IVB, VIB (à l'exception du molybdène), VIIB, VIII, IB, IIB, IIIA et IVA du tableau périodique, outre parmi mono- ou dialcoylétain et mono-, di- ou trialcoylsilicium, et

G. au moins un anion choisi parmi chlorure, bromure, hydroxyle, sulfate, dérivés d'acide phosphorique et d'acide phosphoreux et carboxylates de l'une de formules:

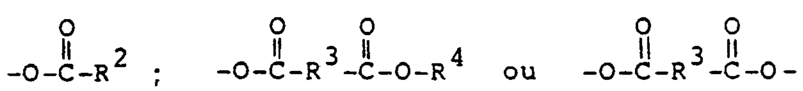

ou

mais à l'exclusion des carboxylates comptant 7 atomes de carbone ou davantage.

Procédé suivant la revendication 1, dans lequel le cation (F) est un ion métallique.

3. Procédé suivant la revendication 1, dans lequel le cation (F) est un cation cuivre, étain, mono- ou dialcoylétain, mono-, di- ou trialcoylsilicium, ou manganèse.

4. Procédé suivant la revendication 1, dans lequel si l'amine est de formule générale I, elle comprend au moins deux atomes d'azote de fonction amino et si l'amine est de formule générale II, tout radical alcoyle uni à un atome d'azote de fonction amino est un radical méthyle.

5. Procédé suivant la revendication 1, dans lequel le métal est l'étain ou le silicium et l'anion est autre que tétrahalogénure.

6. Composition comprenant:

A. un complexe métal/amine suivant l'une quelconque des revendications précédentes, et

B. un bitume.

7. Composition suivant la revendication 6, comprenant en outre une charge.

8. Composition suivant la revendication 7, dans laquelle la charge comprend un granulat minéral, la quantité du comploexe étant d'au moins 0,2% en poids sur base du bitume.

9. Composition suivant la revendication 7, dans laquelle la charge comprend des fibres de verre.

10. Composition suivant la revendication 7, dans laquelle la charge comprend un filet de fibres de verre.

11. Composition suivant l'une quelconque des revendications 6 à 10, dans laquelle le complexe métal/amine a la structure de formule générale II et est exempt de radicaux alcoyle unis à un atome d'azote de fonction amino quelconque.

12. Procédé pour préparer une composition de charge enrobée de bitume à haute résistance en traction, qui comprend le mélange d'un bitume avec un complexe métal/amine obtenu par un procédé suivant l'une quelconque des revendications 1 à 5 pour la formation d'un mélange d'enrobage et ensuite l'enrobage d'une charge au moyen du mélange d'enrobage.

13. Procédé suivant la revendication 12, dans lequel la charge est un granulat minéral.

14. Procédé suivant la revendication 12, dans lequel la charge comprend des fibres de verre.

15. Procédé suivant la revendication 12, dans lequel la charge est un filet de fibres de verre.